Europäisches Patentamt

European Patent Office

Office européen des brevets

(19)

(11) Veröffentlichungsnummer : **0 199 000**
**B1**

(12) **EUROPÄISCHE PATENTSCHRIFT**

(45) Veröffentlichungstag der Patentschrift :
13.12.89

(21) Anmeldenummer : 86101033.8

(22) Anmeldetag : 25.01.86

(51) Int. Cl.⁴ : **C 09 D   3/70, C 08 L  77/00,**
**C 08 K   5/16, C 08 K   5/33**

(54) **Beschichtungspulver für das Schmelzüberzugsverfahren auf der Basis von Polyamiden und haftverbessernden Zusätzen.**

(30) Priorität : 23.03.85 DE 3510688

(43) Veröffentlichungstag der Anmeldung :
29.10.86 Patentblatt 86/44

(45) Bekanntmachung des Hinweises auf die Patenterteilung : 13.12.89 Patentblatt 89/50

(84) Benannte Vertragsstaaten :
AT BE CH DE FR GB IT LI NL SE

(56) Entgegenhaltungen :
DE—A— 2 358 287

(73) Patentinhaber : **HÜLS AKTIENGESELLSCHAFT**
**Patentabteilung / PB 15 - Postfach 13 20**
**D-4370 Marl 1 (DE)**

(72) Erfinder : **Mumcu, Salih, Dr.**
**Leverkusener Strasse 12**
**D-4370 Marl (DE)**
Erfinder : **Feldmann, Rainer, Dr.**
**Leverkusener Strasse 27**
**D-4370 Marl (DE)**

EP 0 199 000 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der Erfindung sind Beschichtungspulver für das Schmelzüberzugsverfahren auf der Basis von Polyamiden und haftverbessernden Zusätzen auf der Basis von Diisocyanaten.

Es ist bekannt, pulverförmige Beschichtungsmittel auf Basis von Polyamiden zur Herstellung lackähnlicher Überzüge von Metallen einzusetzen. Die Beschichtung erfolgt nach dem Schmelzüberzugsverfahren, d. h. nach dem Wirbelsinterverfahren, dem Flammspritzverfahren oder nach dem elektrostatischen Beschichtungsverfahren.

Die Pulver werden erhalten entweder nach dem sogenannten Fällverfahren durch Fällen des Polyamids aus Lösungen oder nach dem Mahlverfahren durch Mahlen des Polyamidgranulats bzw. -schrotes bei tiefen Temperaturen.

Es ist auch bekannt, den Pulvern haftverbessernde Zusätze beizufügen. So werden in der DE-C-12 71 286 Überzugsmittel aus Carbonamidgruppen enthaltenden Kunststoffen zur Herstellung von Überzügen durch Aufschmelzen nach dem Wirbelsinter- oder Flammspritzverfahren beschrieben, die durch einen haftverbessernden Zusatz einer monomeren oder oligomeren Verbindung mit Amino-, Epoxy-, Carbonyl-, Hydroxyl-, Mercapto-, Nitril- oder Isocyanatgruppen gekennzeichnet sind.

Nach dem Beispiel 1 dieser Patentschrift besteht dieser Zusatz aus einem dimerisierten Toluylen-2.4-diisocyanat mit zwei freien Isocyanatgruppen pro Molekül.

Bei der Beschichtung eines auf 320 bis 350 °C erhitzten metallischen Gegenstandes mit einem derart ausgerüsteten Polyamidpulver im Wirbelbett erhält man zwar einen gut haftenden vernetzten Überzug, der jedoch als Schaum vorliegt und somit nicht als Korrosionsschutz für die metallische Oberfläche brauchbar ist.

Die DE-PS 23 58 287 beschreibt ein Verfahren zur Herstellung von Überzügen auf Metallgegenständen durch elektrostatisches Bestäuben mit Pulvermassen aus Polyamiden und/oder Copolyamiden, die ein Phenol enthalten, und anschließendes Erhitzen auf eine Temperatur oberhalb des Schmelzpunktes der Pulvermassen, wobei den Pulvermassen ein Addukt eines festen Phenols mit einem Schmelzpunkt von 30 bis 300 °C mit Mono-, Di- oder Polyisocyanaten zugesetzt wird und das Erhitzen für 3 bis 25 Minuten auf 220 bis 250 °C im Höchstfall so durchgeführt wird, daß keine Vernetzung der Polyamide stattfindet. Dieses Verfahren ist demnach nur für Elektrostatikbeschichtungen im angegebenen Temperaturbereich anwendbar. Bei Wirbelsinterbeschichtungen, die 100 bis 150 °C höhere Substrattemperaturen erfordern, erhält man mit derartig ausgerüsteten Pulvern ebenfalls nur vernetzte Schäume, die keine Korrosionsschutzwirkung für die metallische Oberfläche entfalten.

Nach dem Stand der Technik gelingt es somit nicht allgemein, nach dem Schmelzüberzugsverfahren gut haftende Überzüge aus Beschichtungsmitteln auf der Basis von Polyamiden herzustellen.

Aufgabe der Erfindung ist es, ein Beschichtungspulver auf Basis von Polyamiden bereitzustellen, das bei allen Schmelzüberzugsverfahren brauchbar ist.

Die Lösung der Aufgabe gelingt durch die in den Ansprüchen beschriebenen Maßnahmen.

Einsetzbare Polyamide sind aliphatische Homo- oder Copolyamide mit mindestens sechs Kohlenstoffatomen oder Mischungen aus Homo- und Copolyamiden, deren reaktive funktionelle Gruppen zu mindestens 80 % aus primären und/oder sekundären Aminogruppen bestehen.

Derartige Polyamide werden nach den üblichen bekannten Polykondensations- bzw. Polymerisationsverfahren erhalten, wobei man in Gegenwart von Di- oder Polyaminen im Überschuß arbeitet. Der anzuwendende Aminüberschuß hängt von der gewünschten Molmasse ab; im allgemeinen liegt dieser Überschuß bei 0.05 bis 3 Gew.-%, bezogen auf das Monomer (Lactam, Aminocarbonsäure bzw. Salz aus Diamin und Dicarbonsäure) des herzustellenden Polyamids.

Auf jeden Fall ist der Umsatz bei der Polyreaktion so weit zu treiben, daß mindestens 80 % der reaktiven funktionellen Gruppen des Polyamids aus besagten Aminogruppen bestehen. Die Aminogruppen können sich an Kettenenden und/oder in der Kette und/oder als Seitengruppe an der Polymerkette befinden. Vorzugsweise werden Polyamide verwendet, die an beiden Kettenenden primäre Aminogruppen tragen.

Als die Molmasse regelnde Diamine können übliche Verbindungen, wie Hexamethylendiamin, 2-Methylpentandiamin-(1.5), Octamethylendiamin-(1.8), Dodecamethylendiamin, Isophorondiamin, Trimethylhexamethylendiamin, eingesetzt werden. Als Polyamine werden beispielsweise Diethylentriamin, Triethylentetramin, Tetraethylenpentamin und Dipropylentriamin eingesetzt.

Einsetzbare Polyamide sind demnach, Polyamid 6, Polyamid 8, Polyamid 11, Polyamid 12 sowie Polyamide mit mehr als 12 aliphatisch gebundenen Kohlenstoffatomen pro Carbonamidgruppe. Außerdem können die entsprechenden Copolyamide oder Mischungen aus Homo- und Copolyamiden eingesetzt werden.

Vorzugsweise werden Polyamide verwendet mit mindestens aliphatisch gebundenen Kohlenstoffatomen oder Copolyamide der Mischungen aus Homo- und Copolyamiden, die mindestens 70 Gewichtsprozent der genannten Bausteine enthalten. Als Comonomere können sie demnach 0 bis 30 Gewichtsprozent eines oder mehrerer Comonomerer, wie Caprolactam, Hexamethylendiamin, 2-Methylpentandiamin-(1.5), Octamethylendiamin-(1.8), Dodecamethylendiamin, Isophorondiamin, Trimethylhexamethylendiamin, Adipinsäure, Korksäure, Azelainsäure, Sebacinsäure, Dodecandisäure, Aminoundecansäure, enthalten.

Es können auch Mischungen aus Polyamiden verwendet werden, die aus Polyamiden mit Aminogruppen und solchen ohne funktionelle Endgruppen oder Seitengruppen bestehen.

Die im folgenden als Polyamide bezeichneten genannten Homo- und Copolyamide fallen zunächst als Granulat oder Schrot an, die eine relative Lösungsviskosität zwischen 1.4 und 2.0 (gemessen in 0.5 %iger m-kresolischer Lösung bei 25 °C nach DIN 53 727) aufweisen.

Die Herstellung der Pulver erfolgt nach dem Stand der Technik entweder nach dem Kaltmahlverfahren oder durch Fällung aus Lösung.

Unter Isophorondiisocyanaten werden sowohl die monomeren, dimeren oder trimeren Diisocyanate verstanden, sowie auch die mit Diolen verlängerten Oligomeren. Diese Isocyanate sind mit Lactamen, vorzugsweise Caprolactam oder Acetonoxim verkappt.

Beispielsweise seien die unter den Handelsnamen IPDI B 1 065, IPDI B 1 530, TPDI BF 1 540 vertriebenen Produkte der Chemische Werke Hüls AG genannt.

Vorzugsweise wird eine Mischung eingesetzt bestehend aus monomerem mit Caprolactam verkapptem Isophorondiisocyanat und mit Caprolactam verkapptem trimerisiertem Isophorondiisocyanat.

Der haftverbessernde Zusatz wird in einer Menge von 0.1 bis 10 Gewichtsprozent, bezogen auf das Polyamidpulver, bevorzugt 0.2 bis 5 Gewichtsprozent, zugesetzt.

Im allgemeinen ist es jedoch besser, die Pulverkörner mit dem haftverbessernden Addukt zu überziehen, indem man das Pulver in einem Lösemittel, z. B. Ethanol, suspendiert, das in Ethanol lösliche Addukt hinzugibt und die Suspension vorzugsweise in einem Schaufeltrockner bis zu einer Restfeuchte von 0.15 Gewichtsprozent bei Temperaturen von 50 bis 100 °C trocknet.

Beim Einsatz des Fällpulvers kann die Zugabe des haftverbessernden Adduktes auch vor oder nach der Fällungsphase des Polyamids erfolgen. Bevorzugt wird das Addukt im Fällprozeß bei Reaktorinhalttemperaturen unter 130 °C dem Ansatz zugeführt.

Das erfindungsgemäße Verfahren ist auch anwendbar auf Pulver, die Pigmente, wie $TiO_2$, Ruß, $BaSO_4$, ZnS, Cadmiumrot, Eisenoxid oder Stabilisatoren, enthalten.

Beispiel 1

Man gibt zu 100 Gew.-Teilen Mahlpulver aus Polyamid 12, welches in Gegenwart von 1 Mol-% Hexamethylendiamin (bezogen auf Laurinlactam) polymerisiert wurde und folgende analytischen Daten aufweist

$\eta_{rel}$ = 1.65
$[NH_2]$ = 122 mÄqu./kg
$[COOH]$ = 6 mÄqu./kg

150 Gew.-Teile Ethanol und 1 Teil Addukt aus Isophorondiamin (IPDI) und Caprolactam und trocknet die Suspension in einem Schaufeltrockner zum Schluß bei 70 °C bis zu einer Restfeuchte von 0.15 Gew.-%.

Mit diesem Pulver beschichtet man 1 mm-Bleche, die zuvor in einem Umluftofen auf 400 °C erhitzt wurden. Die Schichtdicken der Überzüge betragen im Mittel 300 μm.

Die Überzüge werden auf Blasenniveau untersucht und die beschichteten Bleche in kochendem Salzwasser gelagert.

Ergebnisse : keine Bläschen, keine Unterrostung bis 150 Stunden.

Beispiel 2

Man stellt, ausgehend von 100 Gew.-Teilen Polyamid aus dem Beispiel 1, durch Fällung aus Ethanol ein sogenanntes Fällpulver her, wobei man in der Abkülphase vor dem Fällen bei 128 °C 2 Gew.-Teile einer 1 : 1-Mischung der Addukte aus IPDI und trimerisiertem IPDI mit Caprolactam dem Ansatz zugibt. Nach Aufarbeitung des Pulvers werden — wie in Beispiel 1 beschrieben — Beschichtungen gemacht.

Ergebnis : keine Bläschen, keine Unterrostung bis 150 Stunden.

Beispiel 3

Man stellt aufgrund von 100 Gew.-Teilen Polyamid aus dem Beispiel 1 durch Fällung aus Ethanol ein Fällpulver her, wobei man 3 Gew.-Teile mit Neopentylglykol verlängertes und mit Caprolactam verkapptes IPDI-Addukt dem Ansatz nach der Fällung bei der Suspensionstemperatur 70 °C zusetzt. Nach Aufarbeitung werden die in Beispiel 1 beschriebenen Beschichtungen durchgeführt.

Ergebnis : keine Bläschen, keine Unterrostung bis 150 Stunden.

Vergleichsbeispiel 1

Hier wird wie in Beispiel 1 verfahren, jedoch als Polyamid ein ungeregeltes Polyamid 12 mit $\eta_{rel}$ = 1.65 eingesetzt. Man erhält einen schaumigen Überzug. Die Unterrostung war nach 1 Tag sichtbar.

Vergleichsbeispiel 2

Hier wird wie in Beispiel 2 verfahren, jedoch als haftverbessernder Zusatz das aus DE-PS 23 58 287 bekannte phenolblockierte IPDI und phenolblockierte trimerisierte IPDI im Verhältnis 1 : 1 dem Fällansatz zugesetzt. Nach Aufarbeitung des Pulvers erhält man als Überzüge nur Schäume. Von der Unterrostungsprüfung wurde abgesehen, da die Blechoberfläche — unter dem Mikroskop betrachtet — nur punktuell gegen Korrosion geschützt war.

Vergleichsbeispiel 3

Hierbei wird wie in Beispiel 1, jedoch ohne erfindungsgemäßes Addukt verfahren. Überzüge enthalten keine Bläschen. Unterrostung wurde nach 30 Stunden deutlich.

## Patentansprüche

1. Beschichtungspulver für das Schmelzüberzugsverfahren auf der Basis von Polyamiden und haftverbessernden Zusätzen auf der Basis von Diisocyanaten enthaltend neben üblichen Zusätzen aliphatische Homo- und/oder Copolyamide mit mindestens sechs Kohlenstoffatomen, die funktionelle Gruppen enthalten, die zumindest zu 80 % aus primären und/oder sekundären Aminogruppen bestehen und als haftverbessernden Zusatz 0.1 bis 10 Gewichtsprozent, bezogen auf die Polyamide, eines mit Lactamen und/oder Acetonoxim verkappten Isophorondiisocyanats und/oder seiner Oligomeren.

2. Beschichtungspulver nach Anspruch 1 enthaltend als haftverbessernden Zusatz 0.2 bis 5 Gewichtsprozent, bezogen auf die Polyamide, einer Mischung aus mit Lactamen und/oder Acetonoxim verkappten Isophorondiisocyanats und des trimerisierten Isophorondiisocyanats.

3. Beschichtungspulver nach den Ansprüchen 1 und 2 enthaltend Polyamide mit mindestens zehn aliphatisch gebundenen Kohlenstoffatomen pro Carbonamidgruppe oder amiden, welche mindestens 70 % der genannten Bausteine enthalten.

4. Verfahren zur Herstellung der Beschichtungspulver nach den Ansprüchen 1 bis 3, dadurch gekennzeichnet, daß man die Polyamidpulverkörner mit dem haftverbessernden Zusatz überzieht.

5. Verfahren zur Herstellung des Beschichtungspulvers nach den Ansprüchen 1 bis 4, dadurch gekennzeichnet, daß man bei Fällpulvern den haftverbessernden Zusatz vor oder nach der Fällung der Lösung bzw. Suspension der Polyamide zusetzt.

6. Verwendung der Beschichtungspulver zum Beschichten von Metallen nach den Schmelzüberzugsverfahren.

## Claims

1. A coating powder for the melt-coating process, based on polyamides and adhesion-promoting additives based on diisocyanates, which contains, in addition to conventional additives, an aliphatic homopolyamide and/or copolyamide having at least six carbon atoms and containing functional groups, at least 80 % of which are primary and/or or secondary amino groups, and, as the adhesion-promoting additive, 0.1 to 10 percent by weight, relative to the polyamides, of an isophorone diisocyanate, masked with lactams and/or acetone oxime and/or of an oligomer thereof.

2. A coating powder according to claim 1, which contains, as the adhesion-promoting additive, 0.2 to 5 percent by weight, relative to the polyamides, of a mixture of isophorone diisocyanate masked with lactams and/or acetone oxime and of trimerized isophorone diisocyanate.

3. A coating powder according to claim 1 or 2, which contains polyamides having at least ten aliphatically bound carbon atoms per carboxamide group, or copolyamides or a mixture of homopolyamides and copolyamides which contain at least 70 % of the said components.

4. A process for preparing the coating powders according to any of claims 1 to 3, characterized in that the polyamide powder particles are coated with the adhesion-promoting additive.

5. A process for preparing the coating powder according to any of claims 1 to 3, characterized in that, in the case of precipitation powders, the adhesion-promoting additive is added before or after the precipitation of the solution or the suspension of the polyamides.

6. Use of the coating powders for coating metals by the melt-coating process.

## Revendications

1. Poudres d'enduction pour le procédé de revêtement par fusion, à base de polyamides et d'additifs améliorant l'adhérence, à base de diisocyanates renfermant, à côte des additifs usuels, des homopolyamides et/ou copolyamides aliphatiques comportant au moins six atomes de carbone renfermant des groupes fonctionnels qui sont constitués, pour 80 % au moins, par des groupes amine primaire et/ou secondaire et, comme additif améliorant l'adhérence, de 0,1 à 10 % en poids, relativement aux polyamides, d'un di-isocyanate d'isophorone enrobé avec des lactames et/ou un acétoxime et/ou de ses oligomères.

2. Poudres d'enduction selon la revendication 1, renfermant, comme additif améliorant l'adhérence, de 0,2 à 5 % en poids, relativement aux polyamides, d'un mélange de di-isocyanate d'isophorone enrobé avec des lactames et/ou un acétoxime, et du di-isocyanate trimérisé d'isophorone.

3. Poudres d'enduction selon les revendications 1 et 2, renfermant des polyamides comportant au moins dix atomes de carbone aliphatiquement liés par groupe carboxylamide ou des copolyamides ou un mélange d'homopolyamides et de copolyamides qui renferment au moins 70 % des motifs indiqués.

4. Procédé de préparation des poudres d'enduction selon les revendications 1 à 3, caractérisé par le fait que l'on recouvre les grains de poudre de polyamide avec l'additif améliorant l'adhérence.

5. Procédé de préparation des poudres d'enduction selon les revendications 1 à 4, caractérisé par le fait que dans le cas de poudres de précipitation, on ajoute l'additif améliorant l'adhérence avant ou après la précipitation de la solution ou suspension des polyamides.

6. L'utilisation des poudres d'enduction pour le revêtement de métaux selon le procédé de revêtement par fusion.